# EUROPEAN PATENT APPLICATION

(11) **EP 4 663 389 A1**
(43) Date of publication of application: **17.12.2025**
(21) Application number: 25180425.8
(22) Date of filing: 03.06.2025
(51) Int. Cl.: B29C 65/02, B29C 65/00, B65B 9/20, B65B 51/26, B65B 57/00, B65B 51/16, B29C 65/78, B29L 31/00

(54) **AN ARRANGEMENT FOR MONITORING A LONGITUDINAL SEALING PROCESS IN A ROLL-FED PACKAGING MACHINE**

(30) Priority: 12.06.2024 IT 202400013471
(71) Applicant: Tetra Laval Holdings & Finance S.A., 1009 Pully (CH)
(72) Inventor: DALCERO, Andrea, 41123 MODENA (IT); BOSCHI, Alessandro, 41123 MODENA (IT); GIANGOLINI, Matteo, 41123 MODENA (IT)
(74) Representative: Tetra Pak Patent Attorneys

(57) **Abstract**

The present disclosure relates to an arrangement (300 ,400) for monitoring a longitudinal sealing process in a roll-fed packaging machine (100) for producing sealed packages (116) of a food product from a web (104) of packaging material fed, along a first axis (A1), in the form of a tube (112). The arrangement (300, 400) comprising: a roller pair (302, 402) for applying pressure along a longitudinal sealing section of the tube (112) to form a longitudinal seal, wherein the roller pair (302, 402) comprises: a counter-pressure roller (304, 404) comprising a roller body (308, 408) and a shaft (310, 410), the roller body (308, 408) being rotatable around the shaft (310, 410) about a second axis (A2) perpendicular to said first axis (A1), the counter-pressure roller (304, 404) being arranged, during use, outside said tube (112); and a pressure roller (306, 406) arranged, during use, inside said tube (112), and configured to apply the pressure along said longitudinal sealing section, against the counter-pressure roller (304, 404) in a direction (R) perpendicular to said first and second axis (A1, A2); and a sensor device (312, 412) integrated with the shaft (310, 410) of the counter-pressure roller (304, 404), and configured to generate a signal associated with a deformation of the shaft (310, 410) caused by the pressure exerted on the counter-pressure roller (304, 404) in said direction (R), when forming said longitudinal seal. The present disclosure further relates to a packaging machine thereof, and a method for operating a longitudinal sealing process.

## Description

### Technical field

The herein disclosed technology relates to the field of packaging technology. More particularly, it is related to an arrangement for monitoring a longitudinal sealing process in a roll-fed packaging machine.

### Background of the invention

Roll-fed packaging machines has for many years been widely used within the food packaging industry for producing sealed packages of food product from a web of carton-based packaging material. The packaging material is typically a laminate packaging material comprising a base layer offering structural integrity, which may be defined by a layer of fibrous material, such as paperboard; and a number of layers of protective and heat-sealing plastic material, such as polyethylene film, covering both sides of the base layer. Sometimes a layer of gas- and light-barrier material, such as an aluminum layer foil, is also provided.

In a roll-fed packaging machine (or system), the packages are produced by forming a longitudinal sealing along an overlap between two ends of the web of packaging material, such that a tube is formed, filling the tube with the food product, and thereafter forming packages from the tube by making transversal sealings at a respective end of the tube.

Forming the longitudinal sealing is traditionally done by providing a longitudinal sealing strip along the overlap section between the two ends, and applying heat and pressure along said section, so the two ends are sealed together. The pressure is typically applied by a pressure roller arranged on the inside of the tube, which presses the packaging material against a counter-pressure roller arranged on the outside of the tube.

The longitudinal sealing of the package is of great importance, as an insufficient seal may affect the structural integrity and protective properties of the package. To produce a proper seal, it is essential that the pressure exerted on the packaging material is maintained above a set threshold value, but not too high so it damages the packaging material. In addition, the pressure has to be applied with an even distribution across the longitudinal sealing section, and to take into account the varying thickness due to the overlapping ends of packaging material. There is therefore a need in this field for better being able to monitor this process. In particular, there is a need for new and improved solutions for determining continuously, accurately, and repeatedly the pressure exerted by the pressure roller.

### Summary of the invention

The herein disclosed technology seeks to at least partly mitigate, alleviate or eliminate one or more deficiencies and disadvantages in the prior art. In particular, it is an object to provide an arrangement for monitoring the longitudinal sealing process in a roll-fed packaging machine. More specifically, to monitor the pressure exerted by a pressure roller during said longitudinal sealing process. The disclosed technology further relates to a packaging machine comprising said arrangement, and a method for operating the longitudinal sealing process.

As stated above, the (sealing) pressure during the longitudinal sealing process is applied by a pressure roller arranged on an inside of the tube. This pressure (or force) can e.g. be exercised by a spring mounted on a filling pipe arranged within the tube. Measuring this pressure from the inside is difficult, and in cases of failures of the components, it would be complicated to replace parts, as well of increased risk of something falling into the food product held within the tube. For these reasons, the inventors propose a way of measuring the pressure from the outside. More specifically, is it proposed to measure the resulting force exerted on the counter-pressure roller, through a sensor device integrated within a shaft of the counter-pressure roller. This allows for measuring the force of the pressure roller during the production process, and enabling responsive actions to be performed. Moreover, the disclosed technology offers a simple solution, that can be implemented in existing sealing systems by only minor modifications (e.g. by replacing the current counter-pressure roller shaft with a new one as disclosed herein). Moreover, the disclosed technology further provides the effect of more accurately measuring the pressure, and giving the possibility of detecting unbalance in the sealing pressure.

Various aspects and embodiments of the disclosed technology are defined below and in the accompanying independent and dependent claims.

According to a first aspect, there is provided an arrangement for monitoring a longitudinal sealing process, in a roll-fed packaging machine, for producing sealed packages of a food product from a web of packaging material. The web of packaging material being fed along a first axis, A1, in the form of a tube. More specifically, the arrangement may be an arrangement for monitoring a pressure applied during said longitudinal sealing process. The arrangement comprises a roller pair for applying pressure along a longitudinal sealing section of the tube to form a longitudinal seal. The roller pair comprises a counter-pressure roller comprising a roller body and a shaft. The roller body being rotatable around the shaft about a second axis, A2, perpendicular to said first axis A1. The counter-pressure roller being arranged, during use, outside said tube. The roller pair further comprises a pressure roller arranged, during use, inside said tube. The pressure roller being configured to apply the pressure along said longitudinal sealing section, against the counter-pressure roller, in a direction, R, perpendicular to said first and second axis, A1, A2. The arrangement further comprises a sensor device. The sensor device being integrated with the shaft of the counter-pressure roller. The sensor device being configured to generate a signal associated with a deformation of the shaft, caused by the pressure exerted on the counter-pressure roller in said direction, R, when forming said longitudinal seal.

A possible associated advantage is that the pressure exerted on the counter-pressure roller can be reliably and effectively determined. This can be done continuously, and in real-time. This can be leveraged e.g. for anomaly detection, predictive maintenance, and feedback control during the longitudinal sealing process.

A further possible associated advantage is that the pressure can be determined from the outside of the tube, reducing the need for components within the tube, and thus also the risk of compromising the sterility or integrity of the package. This further makes it easier to replace if needed.

A further possible associated advantage is that the disclosed technology can be implemented in existing solution with few modifications to the system.

Moreover, the disclosed technology is able to withstand the environmental conditions of the longitudinal sealing process, in which it will operate.

The sensor device may comprise a first load cell and a second load cell. The first and second load cell being arranged to measure the deformation of a respective section of the shaft.

By having two load cells, a balance of the pressure across the length of the roller can be determined. It may be further advantageously in that it offers increased redundancy and reliability into the measurements.

The shaft may comprise a first space and a second space. The first and second space being configured to house the first and second load cell respectively.

The first and second load cell may comprise circuits in which a resistance of the circuit varies as a function of the deformation of the shaft. As the shaft is a non-moving part, compared to the rotatable counter-pressure roller, the deformation of the shaft can be used to accurately give a measurement of the exerted pressure. Thereby, the pressure can be monitored without compromising the sealing effect of the system.

The first and second load cell may comprise a number of piezoresistive strain gauges. Piezoresistive strain gauges may be advantageous in that they can withstand the environmental conditions of the longitudinal sealing process, such as high temperature and high pressure.

The number of piezoresistive strain gauges may be arranged in a Wheatstone bridge. A Wheatstone bridge is an electrical circuit used to measure an unknown electrical resistance by balancing two legs of a bridge circuit. One of the legs including the unknown electrical resistance. A possible associated advantage of the Wheatstone bridge is its ability to provide accurate measurements. Moreover, it offers a compact design, which makes it possible to integrate within the shaft.

The shaft may have a first and a second weakening portion spaced apart along the second axis. The first and second weakening portion may be spaced apart by a defined distance. The first and second weakening portion may be configured to allow for increased deformation in the direction, R, at an area around the respective weakening portion.

A possible associated advantage of providing the shaft with weakening portions is that the deformation of the shaft can be focused to a certain area, e.g. an area at which the load cells are provided. This may further increase the accuracy of the measurement, as well the sensitivity (meaning e.g. that smaller anomalies resulting in deviations in the pressure can be detected).

The sensor device may be configured to detect deformations up to 0.5 mm. The sensor device may be configured to operate in temperatures above 90°C.

The arrangement may further comprise a control unit configured to, in response to the signal being indicative of a pressure exerted on the counter-pressure roller exceeding a threshold value, performing an action of a set of defined actions.

An action of the set of defined actions may be transmitting a control instruction comprising at least one of: an alert signal configured to alert an operator of the packaging machine; an interruption signal configured to interrupt the operation of the packaging machine; and/or a correction signal configured to correct a setting and/or a parameter of at least one actuator of the packaging machine.

An action of the set of defined actions may be storing data indicative of an anomaly having been detected.

According to a second aspect, there is provided a roll-fed packaging machine comprising the arrangement according to any embodiment of the first aspect.

With this second aspect of the disclosed technology, similar advantages and preferred features are present as in the other aspects.

According to a third aspect, there is provided a method for operating a longitudinal sealing process, in a roll-fed packaging machine, for producing sealed packages of a food product. The method comprises feeding a web of packaging material, along a first axis, A1. The method further comprises forming a tube of the web of packaging material. The tube having a longitudinal sealing section. The longitudinal sealing section comprising an overlap section between a first and a second edge section of the web, and a sealing strip applied along said overlap section. The method further comprises applying heat to the longitudinal sealing section. The method further comprises applying pressure along the longitudinal sealing section by a roller pair, to form a longitudinal seal. The roller pair comprises a counter-pressure roller comprising a roller body and a shaft. The roller body being rotatable around the shaft about a second axis, A2, perpendicular to said first axis, A1. The counter-pressure roller being arranged, during use, outside said tube. The roller pair further comprises a pressure roller arranged, during use, inside said tube. The pressure roller being configured to apply the pressure, along said longitudinal sealing section, against the counter-pressure roller in a direction, R, perpendicular to said first and second axis. The method further comprises, while applying the pressure, collecting data indicative of a resulting pressure on the counter-pressure roller by a sensor device integrated with the shaft of the counter-pressure roller. The sensor device being configured to generate a signal associated with a deformation of the shaft caused by the pressure exerted on the counter-pressure roller in said direction, R, when forming said longitudinal seal.

The method may further comprise transmitting a control signal to a control system of the packaging machine, in response to the measured data being indicative of a pressure exerted on the counter-pressure roller exceeding a threshold value. Thereby, continuous adjustment of the longitudinal sealing process can be done, in real-time.

With this third aspect of the disclosed technology, similar advantages and preferred features are present as in the other aspects.

These and other features and advantages of the disclosed technology will in the following be further clarified with reference to the embodiments described hereinafter.

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect.

Further embodiments are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

### Brief description of the drawings

The above and other aspects of the present inventive concept will now be described in more detail, with reference to appended drawings showing variants of the present inventive concept. The figures should not be considered limiting the invention to the specific variant; instead, they are used for explaining and understanding the inventive concept.

As illustrated in the figures, the sizes of layers and regions are exaggerated for illustrative purposes and, thus, are provided to illustrate the general structures of variants of the present inventive concept. Like reference numerals refer to like elements throughout.
Figure 1 is a general illustration of a roll-fed packaging machine, in accordance with some embodiments.
Figure 2 illustrates, by way of example, a longitudinal sealing device, in accordance with some embodiments.
Figure 3 schematically illustrates an arrangement in accordance with some embodiments, in a cross-sectional side view.
Figure 4A illustrates, by way of example, the arrangement in accordance with some embodiments, in cross-sectional view.
Figure 4B illustrates, by way of example, a counter-pressure roller in accordance with some embodiments, in cross-sectional view.
Figures 5A to 5D illustrates, by way of example, a shaft of a counter-pressure roller in accordance with some embodiments, in cross-sectional view.
Figure 6 is a schematic flowchart representation of a method in accordance with some embodiments.

### Detailed description

The herein disclosed technology will now be described more fully hereinafter with reference to the accompanying drawings, in which some variants of the disclosed technology are shown. This technology may, however, be implemented in many different forms and should not be construed as limited to the variants set forth herein; rather, these variants are provided for thoroughness and completeness, and fully convey the scope of the disclosed technology to the skilled person.

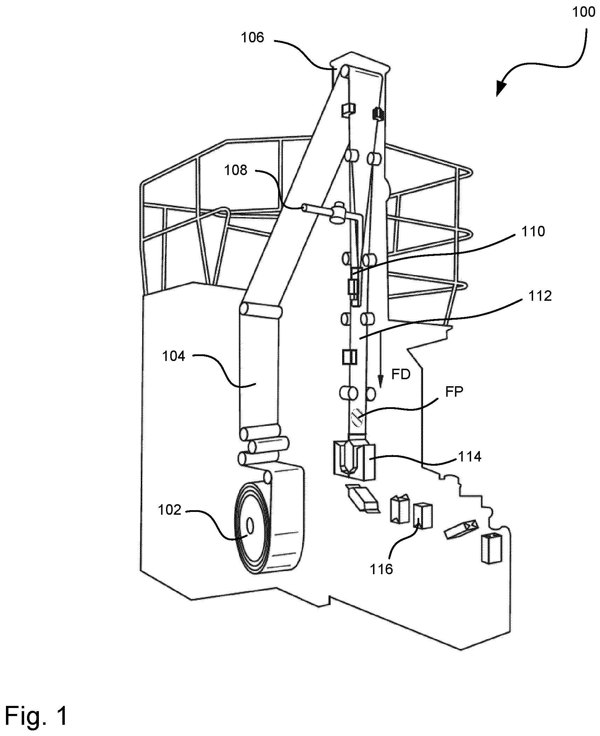

An arrangement for monitoring a longitudinal sealing process in a roll-fed packaging machine, a packaging machine comprising said arrangement, and a method for operating a longitudinal sealing process will now be described with reference to Fig. 1 to 6. It should be noted that the illustrated parts and elements may not be representative of actual dimensions, shapes, or relative sizes, but that they are exaggerated for illustrative purposes.

Figure 1 is a general illustration of a roll-fed packaging machine 100 (or just "packaging machine"). The packaging machine 100 may be a stand-alone packaging machine, or part of a larger food packaging or processing pipeline.

The packaging machine 100 is a packaging machine for producing sealed packages 116 of a food product from a web of packaging material. The packaging material may be a laminate carton-based packaging material. By the wording "laminate" it is herein meant that the packaging material is a multilayer packaging material. More specifically, the packaging material may comprise a paperboard layer and one or more protective layer(s). The protective layer(s) may e.g. be plastic layer(s) (or films(s)). The protective layer(s) may be attached to the paper board layer. For example one or more protective layers may be provided on the side of the packaging material facing the inside of the package to be formed. Additionally, one or more protective layers may be provided on the side of the packaging material facing the outside of the package. The packaging material may further comprise a light-shielding layer. The light shielding layer may e.g. be an aluminum layer (or foil).

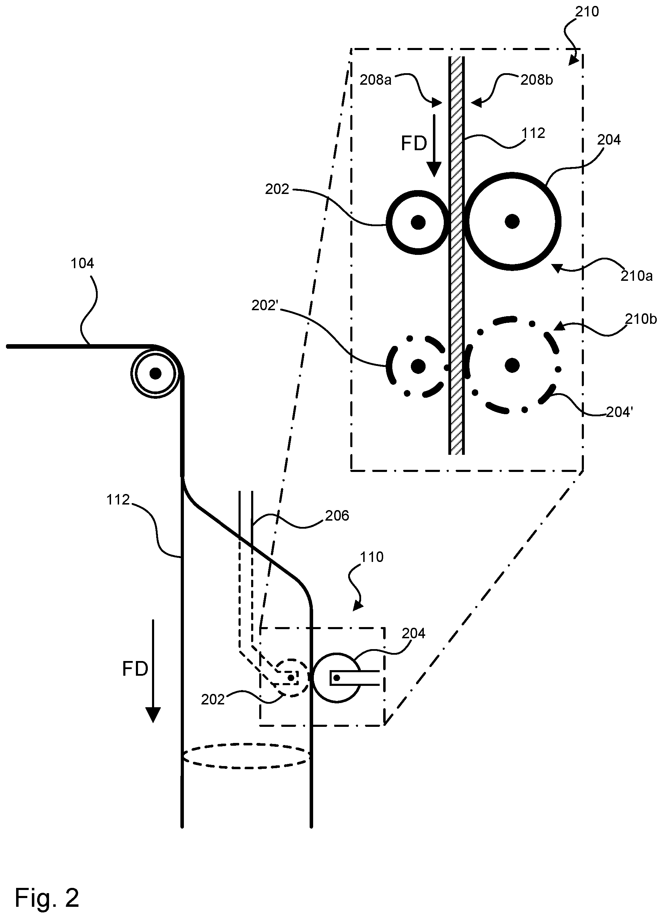

In the broadest form, the packaging machine 100 comprises an arrangement 300 for monitoring a longitudinal sealing process, as will be described further below. The arrangement may be part of a longitudinal sealing device 110 of the packaging machine. The longitudinal sealing device 110 is configured to form a longitudinal sealing of a tube formed by the web of packaging material. The longitudinal sealing device 110 is further described below, in connection with Fig. 2.

As stated above, the packaging machine 100 is a roll-fed packaging machine, the general principles of which will be described in the following, by way of example. In such a machine, the packaging material is provided on a roll (or reel) 102 of packaging material. The reel 102 of packaging material may be loaded into a reel receiver (not shown) of the packaging machine 100. From the roll 102 of packaging material, a web 104 of packaging material is formed. The web 104 of packaging material may pass through a sterilization station 106 for removing or reducing a number of unwanted microorganisms from the web 104. The sterilization station 106 may e.g. comprise a hydrogen peroxide bath, a Low Voltage Electron Beam (LVEB) device or any other suitable equipment capable of meeting food safety regulations.

After sterilization, the web 104 is formed into a tube 112, e.g. by the longitudinal sealing device 110 (or longitudinal sealing station). The tube 112 is formed by joining the two edges (or edge sections) of the web 104 by a longitudinal sealing. The wording "longitudinal" herein refers to the longitudinal direction of the web 104 or tube 112 of packaging material. Thus, the longitudinal direction coincides with a feeding direction, FD, in the packaging machine 100. The feeding direction may also be referred to as a direction along a first axis, A1. When having formed the tube 112, a food product, FP, can be fed into the tube 112 via a product filling pipe 108, arranged at least partly inside the tube 112.

The filled tube 112 then reaches a transversal sealing station 114. The wording "transversal" herein relates to a direction across the tube (i.e. a transversal direction, TD) once flattened in the transversal sealing station 114. In the transversal sealing station 114, a transversal sealing is made in a lower end of the tube, e.g. by using an ultrasonic sealing system or an induction heating sealing system (not shown). Generally, the transversal sealing system has two main functions; 1) providing the transversal sealing, i.e. welding two opposite sides of the tube 112 together such that the product in a lower part of the tube 112, placed downward the transversal sealing system, is separated from the product in the tube 112 placed upward the transversal sealing system, and 2) cutting off the lower part of the tube such that a package 116 is formed. Alternatively, instead of providing the transversal sealing and cutting off the lower part in one and the same system, the step of cutting off the lower part may be made in a subsequent step by a different piece of equipment, or by the consumer if the packages are intended to be sold in a multi-pack.

After a package 116 has been formed, it may be folded in a folding station (not shown) to form a finished food package 116.

Figure 2 illustrates, by way of example, a longitudinal sealing device 110, in accordance with some embodiments. More specifically, Fig. 2 shows a cross-sectional schematic view of the longitudinal sealing device 100 and tube 112 formed by the web 104 of packaging material. As explained above, the longitudinal sealing device 110 is configured to seal a longitudinal sealing section of the tube 112 of packaging material. The tube 112 may be formed from the web 104 of packaging material by a tube forming device (not shown). The tube forming device may form part of the longitudinal sealing device 110, or as a separate device or equipment arranged upstream from the longitudinal sealing device 110. In the latter case, the longitudinal sealing device 110 is fed with the formed tube 112 of packaging material.

The tube 112 is formed by folding a first edge section of the web 104 over a second edge section of the web. Thereby, an overlap section between the first and second edge section are formed. The first and second edge section are to be understood as two opposite ends of the same web of packaging material, such that when put together they form an enclosed tubular body. The longitudinal sealing section herein refers to a section of the tube 112 that is to be sealed. More specifically, the longitudinal sealing section comprises the overlap section between the first and the second edge section of the web. Moreover, the longitudinal sealing section comprises a sealing strip applied along said overlap section. The sealing strip is provided along the overlap section on the inside of the tube 112. The sealing strip serves the purpose of protecting an inner end of the packaging material from coming in contact with the food product held therein. The sealing strip thus creates a barrier between the food product and the paperboard layer of the packaging material.

Moving on, the longitudinal sealing device 110 comprises a roller pair 210. In short, the roller pair 210 comprises a pressure roller 202 and a counter-pressure roller 204. The pressure roller 202 and the counter-pressure roller 204 are arranged opposite each other, as seen from the longitudinal sealing section of the tube 112 which is fed between the rollers during use (as seen e.g. in the zoomed-in portion of Fig. 2). Put differently, the pressure roller 202 and the counter-pressure roller 204 are arranged on opposite sides of the packaging material to be sealed. More specifically, the counter pressure roller 204 is located on an outside 208b of the tube 112 during use, while the pressure roller 202 is located on an inside 208a of the tube 112.

During use, the pressure roller 202 is configured to press against said counter-pressure roller 204 to thereby apply pressure along the longitudinal sealing section of the tube 112 fed between the pressure roller 202 and the counter-pressure roller 204. Thereby, the overlap section between the first and second edge section of the web, and the sealing strip can be sealed together. The pressure roller 202 may be connected to a pressure generating device 206 for generating said pressure. The pressure generating device 206 may e.g. comprise a spring for achieving said pressure.

The longitudinal sealing device 110 may be further configured to heat the longitudinal sealing section, to allow plastic layers of the packaging material, as well as the sealing strip, to at least partly melt. Thereby, the plastic layers and sealing strip can bond together to form the seal.

In some embodiments, the longitudinal sealing device 110 comprise a first roller pair 210a, and a second roller pair 210b. The first and second roller pair 210a, 210b may thus refer to two separate instances of the roller pair 210 described above. The second roller pair 210b is in Fig. 2 illustrated as the optional further roller pair (shown in dash-dot lines). The optional second roller pair (shown in dash-dot lines) comprises a further pressure roller 202' and a further counter-pressure roller 204'. The principles of the roller pair 210, as described above, apply to both the first and second roller pair 210a, 210b. The second roller pair 210b is arranged downstream of the first roller pair 210a (i.e. as seen along the feeding direction FD).

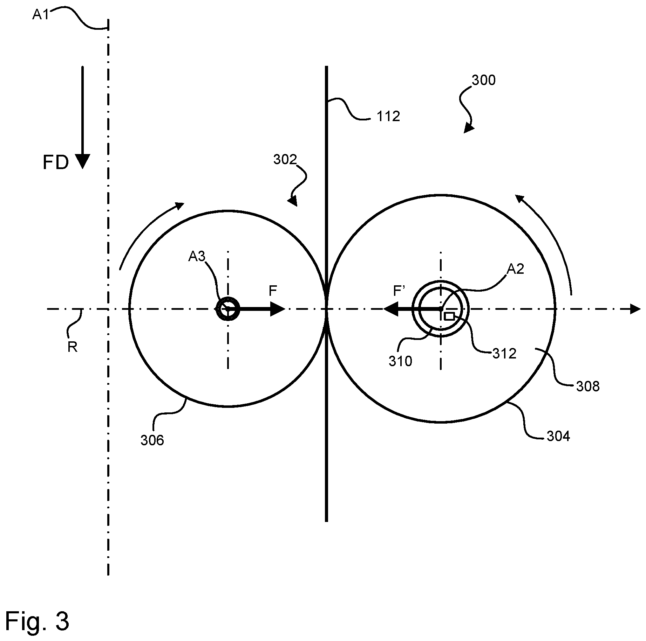

Fig. 3 schematically illustrates an arrangement 300 for monitoring a longitudinal sealing process in a roll-fed packaging machine. The roll-fed packaging machine being a packaging machine for producing sealed packages of a food product, from a web of packaging material, such as the packaging machine 100 described above in connection with Fig.1. In a more specific implementation, the arrangement 300 may be an arrangement for detecting anomalies during the longitudinal sealing process. In another example, the arrangement may be an arrangement for providing feedback control of the longitudinal sealing process. In yet another example, the arrangement may be an arrangement for predictive maintenance during the longitudinal sealing process.

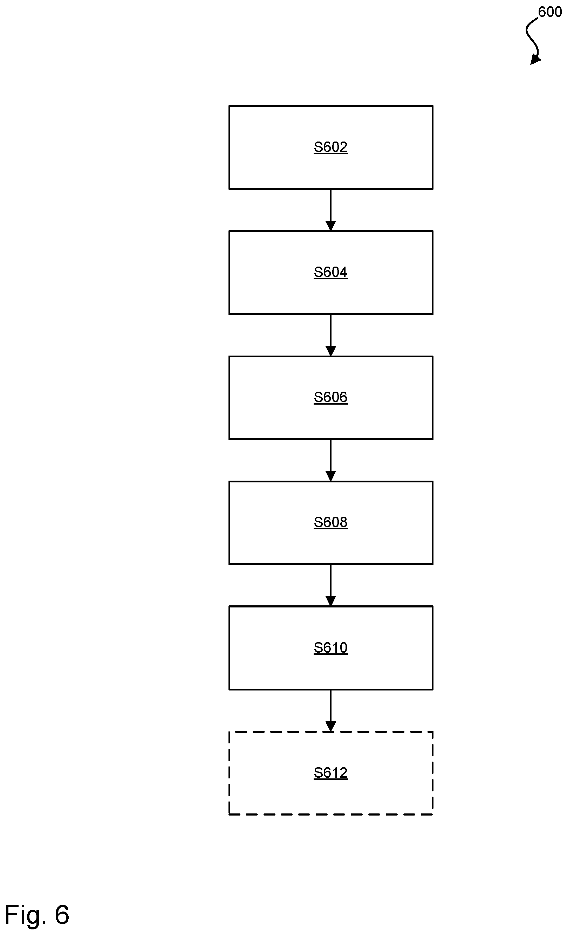

The longitudinal sealing process herein refers to the process of forming the longitudinal sealing, e.g. as described above in connection with Fig. 1. The longitudinal sealing process is further described by way of a method 600 in connection with Fig. 6 below. By the wording "monitoring a longitudinal sealing process", it is herein meant that the arrangement can be used to obtain any information indicative of the longitudinal sealing process. For example, the information may be indicative of a performance of the longitudinal sealing process, or any errors or deviations that may occur. More specifically, the arrangement 300 can be an arrangement for monitoring a (sealing) pressure of the longitudinal sealing process. In this context, the wording "monitoring", may also be understood as determining, detecting, or measuring said pressure. The sealing pressure (or just pressure) is to be construed as the pressure applied by the pressure roller, or the resulting pressure exerted on the counter-pressure roller. This pressure thus corresponds to the pressure applied to the longitudinal sealing section of the tube.

The arrangement 300 comprises a roller pair 302 for applying a pressure along the longitudinal sealing section of the tube, in order to form the longitudinal sealing. The roller pair 302 may be the roller pair 210 (or the first or second roller pair 210a, 210b), as described above. In particular, the roller pair 302 comprises a counter-pressure roller 304 and a pressure roller 306. The counter-pressure roller 304 and the pressure roller 306 are arranged on opposite sides of the packaging material to be sealed. The packaging material (i.e. parts of the tube to be sealed) is thus fed between the pressure roller 306 and the counter-pressure roller 304, during use. More specifically, the pressure roller 306 is arranged on an inside of the tube 112 of packaging material, and the counter-pressure roller 304 is arranged on an outside. As seen in Fig. 3, the web 104 of packaging material is fed along a first axis, A1, in the form of a tube 112. The first axis is thus parallel with the feeding direction, FD, which in the present illustration goes from the top to bottom in the image plane. It is to be noted that only a cross-section of the part of the tube being fed between the roller pair is herein shown. In the illustrated example, the inside of the tube 112 is thus to the left of the line representing the tube 112, and the outside of the tube 112 is to the right of said line.

The counter-pressure roller 304 comprises a roller body 308 and a shaft 310. The roller body 308 being rotatably connected to the shaft 310. In particular, the roller body 308 is rotatable around a second axis, A2. The second axis being perpendicular to the first axis, A1. In the illustrated example, the second axis is parallel to a normal vector of the image plane. The shaft 310 may be a rod, or the like, serving as an axle for the counter-pressure roller 304. The shaft 310 may e.g. be made of metal or any other suitable material.

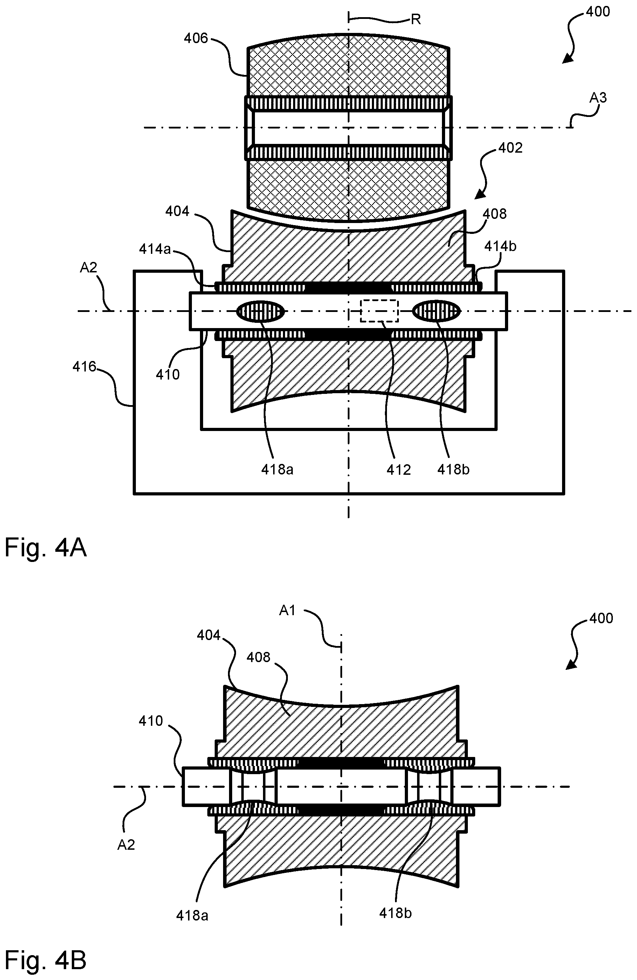

As shown e.g. in Fig. 4A, the roller body 308 may be rotatably connected to the shaft 310 through bearings 414a, 414b. The shaft 308 may in turn be fixedly attached to a supporting frame 416 (also shown in Fig. 4A), for holding the counter-pressure roller 304 in place.

The counter-pressure 304 may also be referred to as a forming roller. It may be referred to as a forming roller in the sense that it helps to guide the web of packaging material into forming the tube. In particular, a set of forming rollers (not shown) may be arranged in a circumferential direction around the tube, to help forming the tube. The set of forming rollers can then define a compulsory passage for the tube. However, only one forming roller, of the set of forming rollers, may form part of a roller pair as described herein for the purpose of forming the longitudinal sealing. In other words, the pressure roller may be arranged opposite one of the set of forming rollers.

The pressure roller 306 is rotatable around a third axis, A3. The third axis being parallel to the second axis, A2. Moreover, the pressure roller comprises a roller body. The roller body may be made of an elastically deformable material. The elastically deformable material may for example be rubber or silicone. The roller body of the counter-pressure roller may be made of a rigid material. Having a rigid counter-pressure roller offers support and stability in the form of a firm backing against which the elastically deformable pressure roller can press the packaging material. Having an elastically deformable pressure roller enables the pressure roller to conform to the surface of the packaging material, accommodating slight variations in thickness, and ensuring consistent contact across the longitudinal sealing section. In particular for compensating for the asymmetry of the overlap section due to the overlapping edge sections of the web of packaging material, and without damaging or in any other way negatively affecting the packaging material, e.g. by forming cracks in an Aluminium foil layer of the packaging material. Together, the elastically deformable pressure roller and the rigid counter pressure roller create an effective sealing mechanism. The pressure roller adapts to the packaging material, ensuring consistent pressure and contact, while the counter-pressure roller provides the necessary support to form a sufficient seal. This combination ensures that the sealing process is efficient, reliable, and capable of handling the demands of high-speed packaging operations.

In use, the pressure roller 306 applies a pressure (or a force) along the longitudinal sealing section, as the packaging material is fed through the roller pair. The pressure is applied against the counter-pressure roller 304 in a direction, R, perpendicular to the first and second axis, A1, A2. More specifically, the pressure roller 306 applies a force having at least a component in the direction R. The pressure is herein illustrated as a force F in the direction R. The counter-pressure roller 304, which is held rigidly in place in the direction R by the supporting frame 416, thereby generates a counter-force F' acting in the opposite direction. The longitudinal sealing section fed between the pressure roller 306 and the counter-pressure roller 304 thereby experiences a pressure for forming the longitudinal sealing.

The arrangement 300 further comprises a sensor device 312. The sensor device 312 is integrated within the shaft 310 of the counter pressure roller 304. The sensor device 312 is herein illustrated as a box within the shaft 310. This is however merely for illustrative purposes, as the sensor device 312 may take any shape depending on a specific realization. How the sensor device 312 can be integrated within the shaft 310 is further illustrated in Figs. 4A to 5D.

The sensor device 312 is configured to generate a signal associated with a deformation of the shaft 310, caused by the pressure exerted on the counter-pressure roller 304 in the direction R, when forming the longitudinal seal. The generated signal can thereby be indicative of the exerted pressure. Put differently, the sensor device 312 can be configured to measure the deformation of the shaft 310 caused by the applied pressure, during use. The generated signal may thus be indicative of the deformation of the shaft 310. The generated signal may for instance be indicative of a resistance in a circuit of the sensor device 312, which varies as a function of the deformation of the shaft 310. By knowing the material and structural properties of the shaft 310, as well as its design and dimensions, a value of the exerted pressure (or rather the exerted force) can be derived from the measured deformation of the shaft. More specifically, from the signal associated with the deformation, one can derive the force applied to the shaft. Since the area of application of the force is constant, the force can be converted into a corresponding pressure value. The obtained pressure may be an absolute pressure. The pressure can be a point pressure value. I.e. a pressure acting at a certain location along the shaft. By deriving the point pressure value of two or more locations along the shaft, a pressure balance along the shaft can be obtained.

More specifically, sensor device 312 may comprise a load cell. The load cell may be configured to convert a measured deformation caused by the pressure exerted by the pressure roller 306 on the counter-pressure roller 304 in direction R, into a current signal. The load cell may be temperature-compensated and therefore capable of working at temperatures above 80°C, or more specifically above 90°C. The load cell may be operable at temperatures up to 130°C.

The sensor device 312 may be configured to detect deformations up to 1 mm. More specifically, the sensor device 312 may be configured to detect deformations up to 0.5 mm. The pressure applied by the pressure roller 306 may be up to 300 N. The sensor device 312 may thus be configured to generate signals for pressures in the range of 0 to 300 N. Moreover, the sensor device 312 may be configured to withstand electron beam radiations, and/or hydrogen peroxide vapors, depending on the sterilization process used in the packaging machine.

The signal may be generated by the sensor device 312 continuously, during the operation of the packaging machine. The signal can be acquired by an operator of the machine, or processed by a computing system (such as a control unit described below) and used as a way of monitoring the longitudinal sealing process. The pressure exerted on the packaging material (and hence also on the counter-pressure roller) during the longitudinal sealing process provides valuable information about the status, and for the control of the sealing process.

As an example, variations in the pressure can be used for anomaly detection, and quality control in real-time. A reason for this is that local deviations in material thickness (either increased thickness, e.g. due to residues on the packaging material, or reduced thickness, e.g. due to delamination or other damages of the packaging material) can show up as peaks or valleys in the pressure. Other anomalies may be detected as well, such as misalignment of the overlap section, or of the longitudinal sealing strip, twisting of the tube, etc.

In another example, real-time pressure monitoring can also serve as a diagnostic tool for predictive maintenance of the system. Variations in the expected pressure profiles, or drift-offs can indicate wear and tear, or potential failures in the sealing components. This predictive maintenance capability allows for timely interventions before critical machine breakdowns occur, thereby reducing downtime and maintenance costs.

In yet another example, the pressure monitoring can be used as feedback control to the longitudinal sealing process. It can allow for instant adjustments to be made, such as adjustments of machine settings or parameters, for ensuring consistent seal quality, and process optimization. This can e.g. lead to reduced material waste and improved production speeds.

The arrangement 300 may further comprise a control unit (not shown). The control unit may be provided as a stand-alone unit, or implemented as part of a control system of the packaging machine, or of the sensor device 312. The control unit may be configured to process the signals generated by the sensor device 312. For example, the control unit may process a current (or voltage) signal generated by the sensor device 312 (or load cell(s) thereof), and convert it to a pressure value. In addition, the control unit may comprise an amplifier (e.g. a current or voltage amplifier), configured to amplify the generated signal.

Moreover, the control unit may be configured to, in response to the signal being indicative of a pressure exerted on the counter-pressure roller exceeding a threshold value, performing an action of a set of defined actions. In other words, if the control unit detects a pressure exceeding a threshold value, the action may be performed. It is to be appreciated that the pressure can exceed the threshold either by being above the threshold (i.e. too high pressure detected), or by being below the threshold (i.e. too low pressure detected).

An action of the set of defined actions may be transmitting a control instruction. The control instruction may e.g. be transmitted to a control system of the packaging machine, or to an operator of the packaging machine.

The control instruction may be an alert signal configured to alert an operator of the packaging machine. This may e.g. involve displaying an alert on a user interface of the packaging machine. The alert signal may e.g. be indicative of an anomaly having been detected. The alert signal may then give the operator the possibility of acting on the anomaly.

The control instruction may be an interruption signal configured to interrupt the operation of the packaging machine. The interruption signal may thus halt the packaging machine, to allow for some ameliorative action to be performed.

The control instruction may be a correction signal configured to correct a setting and/or a parameter of at least one actuator of the packaging machine. The correction signal may thus be used for continuous adjustment of the sealing process, or any other process of the packaging machine.

In another example, an action of the set of defined actions may be storing data indicative of an anomaly having been detected. The stored data may e.g. be information indicating which package will contain the anomaly, or what machine settings or parameters that were used while the anomaly was detected.

Further aspects relating to the sensor device 312, and the shaft 301 will now be described below, in connection with Fig. 4A and 4B.

Fig. 4A illustrates, by way of example, the arrangement 400 in accordance with some embodiments, in cross-sectional view. More specifically, the arrangement 400 is shown in a cross-section in a plane parallel with the second axis, A2, the third axis, A3 and the direction, R, of the applied pressure. Fig. 4B then illustrates parts of the arrangement 400, namely the counter-pressure roller 404, in a cross-sectional view of a plane parallel with the first axis, A1, and the second axis, A2. It goes without saying that the arrangement 400 is just a different illustration of the arrangement 300 described above in connection with Fig. 3. Thus, any aspects or principles described above, in connection with the arrangement 300, are applicable also to the arrangement described in the following, and vice versa.

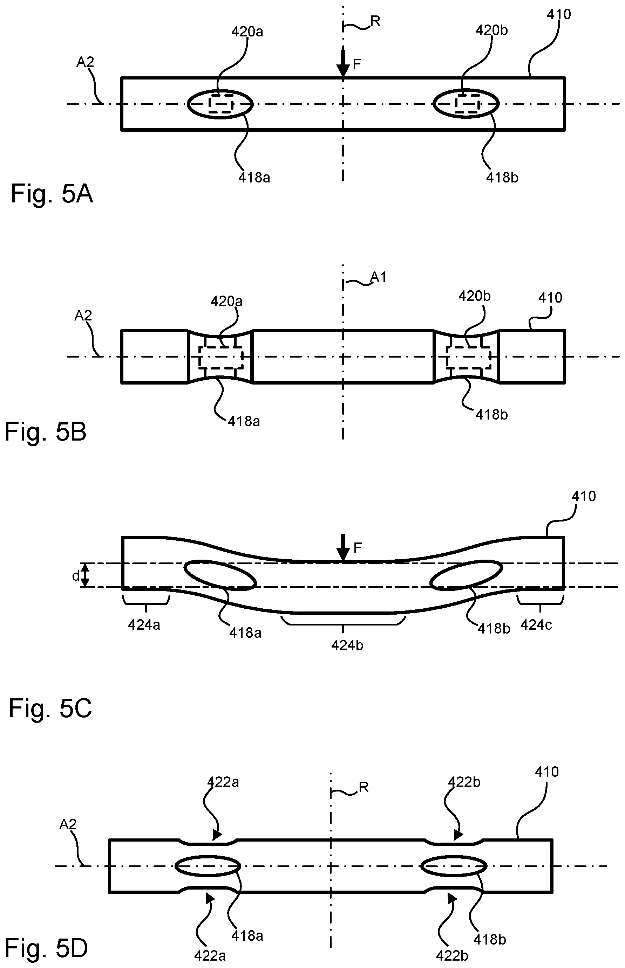

As mentioned above, the arrangement 400 comprises a roller pair 402. The roller pair 402 comprising a counter-pressure roller 404 and a pressure roller 406. More specifically, the counter-pressure roller 404 comprises a roller body 408, and a shaft 410. The shaft 410 can be rigidly connected to a supporting frame 416. To enable rotation of the counter-pressure roller 404, the counter-pressure roller 404 can be rotatably connected to the shaft 410. In the illustrated example, this is achieved by bearings 414a, 414b, arranged at a respective end portion of the counter-pressure roller 404. As is further illustrated in Fig. 5C, the deformation of the shaft 410, as described herein, may be caused by the roller body 408 of the counter-pressure roller 404 being pressed in the direction R of the applied pressure. As end portions of the shaft 410 is rigidly attached to the supporting frame 416, a central portion of the shaft 410 is caused to deform.

Moreover, as illustrated herein, the counter-pressure roller 404 (or rather the roller body thereof) has a concave shape, to follow a shape of the tube. The pressure roller 406 may in turn have an inverted shape, i.e. a convex shape. However, in some embodiments, the pressure roller 406 have a cylindrical shape.

The arrangement 400 further comprises a sensor device 412, integrated within the shaft 410. By being integrated, it is herein meant that the sensor device 412, or at least the active parts needed for measuring the mechanical pressure, and convert it to an electrical signal, is provided (or housed) within the shaft. Components of the sensor device 412 may be provided on a surface of the shaft 410, or placed within the shaft. The sensor device 412 may for instance be housed within a space of the shaft 410. The space may be formed between the shaft and the bearings 414a, 414b and roller body 408 surrounding the shaft 410. The space may be a through hole (as shown herein) or a cavity of the shaft. In another example, the space may be a recess of the shaft 410, forming a space between the shaft and the bearings 414a, 414b and roller body 408. More specifically, the shaft 410 may comprise a first and a second space 418a, 418b.

The sensor device 412 may comprise a first load cell 420a, and a second load cell 420b. The first and second load cell 420a, 420b may be arranged to measure the deformation of a respective section of the shaft 410. The first and second load cell may be spaced apart, along a central axis of the shaft 410 (i.e. along the second axis A2). The first and second load cell 420a, 420b may be housed within the first and second space 418a, 418b respectively. The placement and shape of the first and second space 418a, 418b (and consequently the placement of the first and second load cell 420a, 420b) along the shaft 410, may be dependent e.g. on the length, thickness, and material properties of the shaft. Preferably, the first and second space 418a, 418b, are positioned in locations along the shaft experiencing the most deformation. Even though described as having two load cells, the sensor device 412 may comprise any number of load cells.

The load cell(s) (e.g. the first and second load cell 420a, 420b) may comprise a circuit (or sensing circuit) in which a resistance of the circuit varies as a function of the deformation of the shaft 410. In some embodiments, the first and second load cell 420a, 420b may form a common circuit. This may provide for improved robustness and stability, as only one sensing circuit is required. This means also a less complex circuit. In other embodiments, the first and second load cell 420a, 420b may comprise a respective circuit. This allows for detecting an unbalance of the pressure along the shaft.

The load cell(s) (e.g. the first and second load cell 420a, 420b) may comprises a number of piezoresistive strain gauges. The number of piezoresistive strain gauges may be arranged in a so-called Wheatstone bridge.

It is to be understood as the wording "sensor device" herein encompass any component relevant for the measuring and generation of signal associated with the deformation, and consequently pressure of the shaft. The sensor device may thus comprise one or more sensors (e.g. the load cell(s)), means (e.g. processing circuitry) for processing the output of the one or more sensors, one or more amplifiers for amplifying the output of the one or more sensors, and the control unit, as described above. The load cell(s) thus refers to the actual sensing means, configured to measure the deformation/pressure/force. The load cell(s) thus converts a mechanical force to an electrical signal. The load cell(s) may in turn be made up of one or more strain gauges, which refers to the specific sensing circuit used to measure deformation of a surface to which the strain gauge is attached.

Moving on, the shaft 410 may further comprise a first and a second weakening portion 422a, 422b. The first and second weakening portion 422a, 422b may be spaced apart along the second axis, by a defined distance. The first and second weakening portion 422a, 422b may be configured to allow for increased deformation of the shaft, in the direction R, at an area around the respective weakening portion. In some embodiments, the first and second space 418a, 418b may also serve the purpose of the first and second weakening portion 422a, 422b. In another example, the first and second weakening portion 422a, 422b may be formed by separate spaces of the shaft 410, as exemplified in Fig. 5D.

The weakening portions may serve the purpose of achieving a more controlled deformation of the shaft 410, in order to obtain a better measurement of the pressure exerted on the counter-pressure roller. This can e.g. be achieved by selecting the placement of the weakening portions and the load cell(s), such that the deformation of the shaft 410 occurs generally around a location of the load cells.

Figures 5A to 5D illustrates, by way of example, a shaft 410 of a counter-pressure roller in accordance with some embodiments, in cross-sectional view. The shaft 410 may thus be the shaft as described in the foregoing.

Fig. 5A shows the shaft 410 in a cross-section in a plane parallel with the second axis, A2, and the direction, R, in which the force F is applied. As described in the foregoing, the shaft 410 may comprise a first and a second space 418a, 418b, configured to house the first and second load cell 420a, 420b respectively. Fig. 5B shows the same shaft 410, but in a cross-section in a plane parallel with the first axis, A1, and the second axis, A2. Even though the first and second space 418a, 418b has been illustrated as cylindrical through-holes, they may take other shapes as well.

Fig. 5C, which shows the same cross-sectional view as in Fig. 5A, shows the shaft 410 in a deformed state. It is to be noted that the deformation of the shaft 410 is herein exaggerated for illustrative purposes. In the illustrated example, a central portion 424b of the shaft 410 has been displaced by a distance d, compared to a first and second end portion 424a, 424c of the shaft 410. In this example, the first and second space 418a, 418b may also serve as weakening portions, thus allowing deformation of the shaft to be focused to an area around the first and second load cells.

Fig. 5D shows another example of the shaft 410, in the same cross-sectional view as in Fig. 5A. The shaft is shown having a first and second weakening portion 442a, 422b. The first and second weakening portion 422a, 422b are formed by recesses on a surface of the shaft 410. In other embodiments, the recesses may constitute the first and second space 418a, 418b for housing the first and second load cell 420a, 420b, while the through holes may constitute the weakening portions.

It is to be appreciated that deformation of the shaft, may in the present context be construed as a bending of the shaft. In other words, deformation of the shaft may be a displacement of a portion of the shaft in relation to another portion, such as illustrated in Fig. 5C. In other realizations, deformation of the shaft may be a compression of the shaft. In other words, the shaft may be compressed under the pressure exerted on the counter-pressure roller. Compression of the shaft may e.g. be enabled by weakening portions within the shaft.

Figure 6 is a schematic flowchart representation of a method 600 in accordance with some embodiments. More specifically, it is a method 600 for operating (or performing) a longitudinal sealing process in a roll-fed packaging machine for producing sealed packages. In other words, it may be a method 600 for forming a longitudinal sealing. The method 600 may leverage an arrangement 300, 400 ad described in the foregoing. Thus, any aspects and principles described above, are applicable also to the method 600 presently described.

Below, the different steps of the method 600 are described in more detail. Even though illustrated in a specific order, the steps of the method 600 may be performed in any suitable order as well as multiple times. Thus, although Fig. 6 may show a specific order of method steps, the order of the steps may differ from what is depicted. In addition, two or more steps may be performed concurrently or with partial concurrence. For example, the step of applying S606 heat to the longitudinal sealing section, and the step of applying S608 pressure along the longitudinal sealing section may be performed at least partly concurrently. Moreover, the steps of the method 600 may be performed continuously, as the web of packaging material is fed S602 through the machine. Such variation will depend on a specific realization. All such variations are within the scope of the invention. Further variants of the method 600 will become apparent from the present disclosure. The herein described embodiments are only given as examples and should not be limiting to the present invention. Other solutions, uses, objectives, and functions within the scope of the invention as claimed below described patent claims should be apparent for the person skilled in the art. It should be appreciated that the steps which are comprised in dashed lines in Fig. 6 are examples of optional steps which may form part of a number of alternative embodiments. The optional steps need not be performed in order. Furthermore, it should be appreciated that not all of the optional steps need to be performed.

The method 600 comprises feeding S602 a web of packaging material along a first axis A1.

The method 600 further comprises forming S604 a tube of the web of packaging material having a longitudinal sealing section. The longitudinal sealing section comprises an overlap section between a first and a second edge section of the web, and a sealing strip applied along said overlap section.

The method 600 further comprises applying S606 heat to the longitudinal sealing section.

The method 600 further comprises applying S608 pressure along the longitudinal sealing section by a roller pair, to form a longitudinal seal. The roller pair comprising: a counter-pressure roller comprising a roller body and a shaft, the roller body being rotatable around the shaft about a second axis, A2, perpendicular to said first axis, A1, the counter-pressure roller being arranged, during use, outside said tube. The roller pair further comprising a pressure roller arranged, during use, inside said tube, and configured to apply the pressure along said longitudinal sealing section, against the counter-pressure roller in a direction, R, perpendicular to said first and second axis. The roller pair may be the roller pair as described in the forgoing.

While applying S608 the pressure, the method 600 further comprises collecting S610 data indicative of a resulting pressure on the counter-pressure roller by a sensor device integrated with the shaft of the counter-pressure roller. The sensor device being configured to generate a signal associated with a deformation of the shaft caused by the pressure exerted on the counter-pressure roller in said direction, R, when forming said longitudinal seal. The sensor device may be the sensor device as described in the forgoing.

The method 600 may further comprise transmitting S612 a control signal to a control system of the packaging machine, in response to the measured data being indicative of a pressure exerted on the counter-pressure roller exceeding a threshold value. Put differently, the method may comprise detecting whether the measured data being indicative of a pressure exerted on the counter-pressure roller exceeding the threshold value, and if so, adjusting one or more control settings of the packaging machine. In some embodiments, the method 600 may comprise performing an action of the set of defined actions, as described in the forgoing.

It should be appreciated that the steps of the method may be performed by a control system of the packaging machine by sending control instructions to different subsystems of the packaging machine configured to perform the steps. For example, the wording "applying heat to the longitudinal sealing section", may be understood as sending a control instruction to a heating system to apply heat to the longitudinal sealing section.

Additionally, variations to the disclosed variants can be understood and effected by the skilled person in practicing the claimed invention, from a study of the drawings, the disclosure, and the appended claims.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative.

It will also be understood that, although the term first, second, etc. may be used herein to describe various elements or features, these elements should not be limited by these terms. These terms are only used to distinguish one element from another. For example, a first element could be termed a second element, and, similarly, a second element could be termed a first element, without departing from the scope of the embodiments. The first element and the second element are both elements, but they are not the same element.

As used herein, the wording "one or more of" or "any one of" a set of elements (as in "one or more of A, B and C" or "at least one of A, B and C") is to be interpreted as either a conjunctive or disjunctive logic. Put differently, it may refer either to all elements, one element or combination of two or more elements of a set of elements. For example, the wording "one or more of A, B and C" may be interpreted as A or B or C, A and B and C, A and B, B and C, or A and C.

## Claims

1. An arrangement (300 ,400) for monitoring a longitudinal sealing process in a roll-fed packaging machine (100) for producing sealed packages (116) of a food product from a web (104) of packaging material fed, along a first axis (A1), in the form of a tube (112), the arrangement (300, 400) comprising:
a roller pair (302, 402) for applying pressure along a longitudinal sealing section of the tube (112) to form a longitudinal seal, wherein the roller pair (302, 402) comprises:
a counter-pressure roller (304, 404) comprising a roller body (308, 408) and a shaft (310, 410), the roller body (308, 408) being rotatable around the shaft (310, 410) about a second axis (A2) perpendicular to said first axis (A1), the counter-pressure roller (304, 404) being arranged, during use, outside said tube (112); and
a pressure roller (306, 406) arranged, during use, inside said tube (112), and configured to apply the pressure along said longitudinal sealing section, against the counter-pressure roller (304, 404) in a direction (R) perpendicular to
said first and second axis (A1, A2);
and
a sensor device (312, 412) integrated with the shaft (310, 410) of the counter-pressure roller (304, 404), and configured to generate a signal associated with a deformation of the shaft (310, 410) caused by the pressure exerted on the counter-pressure roller (304, 404) in said direction (R), when forming said longitudinal seal.

2. The arrangement (300, 400) according to claim 1, wherein the sensor device (312, 412) comprises a first load cell (420a) and a second load cell (420b) arranged to measure the deformation of a respective section of the shaft (310, 410).

3. The arrangement (300, 400) according to claim 2, wherein the shaft (310, 410) comprises a first space (418a) and a second space (418b) configured to house the first and second load cell (420a, 420b) respectively.

4. The arrangement (300, 400) according to claim 2 or 3, wherein the first and second load cell (420a, 420b) comprises circuits in which a resistance of the circuit varies as a function of the deformation of the shaft (310, 410).

5. The arrangement (300, 400) according to claim 4, wherein the first and second load cell (420a, 420b) comprises a number of piezoresistive strain gauges.

6. The arrangement (300, 400) according to claim 5, wherein the number of piezoresistive strain gauges are arranged in a Wheatstone bridge.

7. The arrangement (300, 400) according to any one of the claims 1 to 6, wherein the shaft (310, 410) has a first and a second weakening portion spaced apart along the second axis, by a defined distance, wherein the first and second weakening portion are configured to allow for increased deformation in the direction (R) at an area around the respective weakening portion.

8. The arrangement (300, 400) according to any one of the claims 1 to 7, wherein the sensor device (312, 412) is configured to detect deformations up to 0.5 mm.

9. The arrangement (300, 400) according to any one of the claims 1 to 8, wherein the sensor device (312, 412) is configured to operate in temperatures above 90°C.

10. The arrangement (300, 400) according to any one of the claims 1 to 9, further comprising a control unit configured to, in response to the signal being indicative of a pressure exerted on the counter-pressure roller exceeding a threshold value, performing an action of a set of defined actions.

11. The arrangement (300, 400) according to claim 10, wherein an action of the set of defined actions is transmitting a control instruction comprising at least one of:
an alert signal configured to alert an operator of the packaging machine;
an interruption signal configured to interrupt the operation of the packaging machine; and/or
a correction signal configured to correct a setting and/or a parameter of at least one actuator of the packaging machine.

12. The arrangement (300, 400) according to claim 10 or 11, wherein an action of the set of defined actions is storing data indicative of an anomaly having been detected.

13. A roll-fed packaging machine (100) comprising the arrangement (300, 400) according to any one of the claims 1 to 12.

14. A method (600) for operating a longitudinal sealing process in a roll-fed packaging machine for producing sealed packages of a food product, the method (600) comprising:
feeding (S602) a web of packaging material along a first axis (A1);
forming (S604) a tube of the web of packaging material having a longitudinal sealing section, the longitudinal sealing section comprises an overlap section between a first and a second edge section of the web, and a sealing strip applied along said overlap section,
applying (S606) heat to the longitudinal sealing section;
applying (S608) pressure along the longitudinal sealing section by a roller pair, to form a longitudinal seal, the roller pair comprises: a counter-pressure roller comprising a roller body and a shaft, the roller body being rotatable around the shaft about a second axis (A2) perpendicular to said first axis (A1), the counter-pressure roller being arranged, during use, outside said tube; and a pressure roller arranged, during use, inside said tube, and configured to apply the pressure along said longitudinal sealing section, against the counter-pressure roller in a direction (R) perpendicular to said first and second axis;
while applying (S608) the pressure, collecting (S610) data indicative of a resulting pressure on the counter-pressure roller by a sensor device integrated with the shaft of the counter-pressure roller, the sensor device being configured to generate a signal associated with a deformation of the shaft caused by the pressure exerted on the counter-pressure roller in said direction (R), when forming said longitudinal seal.

15. The method (600) according to claim 14, further comprising transmitting (S612) a control signal to a control system of the packaging machine, in response to the measured data being indicative of a pressure exerted on the counter-pressure roller exceeding a threshold value.
